(19) Europäisches Patentamt
European Patent Office
Office européen des brevets

(11) **EP 4 629 010 A1**

(12) **EUROPEAN PATENT APPLICATION**
published in accordance with Art. 153(4) EPC

(43) Date of publication:
**08.10.2025 Bulletin 2025/41**

(21) Application number: **22965833.1**

(22) Date of filing: **17.11.2022**

(51) International Patent Classification (IPC):
***G05D 1/00*** (2024.01)

(52) Cooperative Patent Classification (CPC):
**G05D 1/243; G05D 1/645;** G05D 2105/315;
G05D 2107/67; G05D 2109/10; G05D 2111/10

(86) International application number:
**PCT/JP2022/042734**

(87) International publication number:
**WO 2024/105857 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: HONDA MOTOR CO., LTD.
Tokyo 105-8404 (JP)

(72) Inventors:
• **MATSUZAKI Sango**
**Wako-shi, Saitama 351-0193 (JP)**
• **KOMURO Misa**
**Wako-shi, Saitama 351-0193 (JP)**

(74) Representative: **Kiwit, Benedikt**
**Mitscherlich PartmbB**
**Patent- und Rechtsanwälte**
**Karlstraße 7**
**80333 München (DE)**

(54) **MOBILE BODY CONTROL DEVICE, MOBILE BODY CONTROL METHOD, AND PROGRAM**

(57) A movable body control device includes: a recognition portion that recognizes a situation at a periphery of a movable body and a user based on an image in which the situation at the periphery of the movable body is captured; and a control portion that controls the movable body so that the movable body moves in front of the user and leads the user based on the situation at the periphery, wherein in a case where it is assumed that leading of the user is continued, when it is predicted that a predetermined situation occurs which prevents the user from arriving at a desired position at which the user wants to arrive due to presence of the movable body in front of the user, the control portion transmits a direction in which the user proceeds to the user by controlling the movable body so as to stop the leading of the user and so that the movable body performs a specific operation which is a rotation operation or a turn operation.

FIG. 5

**Description**

TECHNICAL FIELD

The present invention relates to a movable body control device, a movable body control method, and a program.

BACKGROUND

In the related art, a robot that guides a user to a desired place or transports a load has been known (for example, refer to Patent Document 1).

[Related Art Documents]

[Patent Documents]

[Patent Document 1]
Japanese Unexamined Patent Application, First Publication No. 2012-111011

SUMMARY OF INVENTION

PROBLEMS TO BE SOLVED BY THE INVENTION

However, there are cases in which a system described above cannot guide the user to a desired direction.
In view of the foregoing, an object of the present invention is to provide a movable body control device, a movable body control method, and a program capable of guiding a user in a desired direction.

MEANS FOR SOLVING THE PROBLEM

The following configurations are employed in a movable body control device, a movable body control method, and a program according to this invention.

(1): A movable body control device according to an aspect of this invention includes: a recognition portion that recognizes a situation at a periphery of a movable body and a user based on an image in which the situation at the periphery of the movable body is captured; and a control portion that controls the movable body so that the movable body moves in front of the user and leads the user based on the situation at the periphery, wherein in a case where it is assumed that leading of the user is continued, when it is predicted that a predetermined situation occurs which prevents the user from arriving at a desired position at which the user wants to arrive due to presence of the movable body in front of the user, the control portion transmits a direction in which the user proceeds to the user by controlling the movable body so as to stop the leading of the user and so that the movable body performs a specific operation which is a rotation operation or a turn operation.
(2): In the aspect (1) described above, the predetermined situation is a situation in which when it is assumed that the movable body continues the leading, and the movable body arrives at the desired position or a vicinity of the desired position, the movable body is located between the user and the desired position, and a region for the user to overtake the movable body so as to be closer to the desired position than the movable body is not present at a position where the movable body is present and in a vicinity of the position.
(3): In the aspect (1) or (2) described above, the predetermined situation is a situation in which the movable body moves in a region of a first width, and then the movable body moves in a region of a second width that is narrower than the first width.
(4): In any of the aspects (1) to (3) described above, the control portion controls the movable body so that before entering the region of the second width, the leading of the user is stopped, and the movable body performs the specific operation, and transmits the direction in which the user proceeds to the user.
(5): In any of the aspects (1) to (4) described above, the region of the first width is a first traffic path which is a passage of the first width or a road of the first width, the region of the second width is a second traffic path which is a passage of the second width or a road of the second width, the first traffic path and the second traffic path intersect with each other, and the control portion transmits to the user so that the user enters the second traffic path by controlling the movable body so as to stop the leading of the user and perform the specific operation in a region in which the first traffic path and the second traffic path intersect with each other or in a vicinity of the region of intersecting.
(6): In any of the aspects (1) to (5) described above, the control portion transmits to the user so that the user enters the second traffic path by controlling the movable body so that the movable body is rotated, a front surface of the movable body faces in a direction in which the user is present, and then the specific operation is performed in the region in which the first traffic path and the second traffic path intersect with each other or in the vicinity of the region of intersecting.

(7): In any of the aspects (1) to (6) described above, the specific operation is to rotate or turn the movable body to reciprocate a direction of a front surface of the movable body between a first direction and a second direction, the first direction is a direction in which the user is desired to proceed, and the second direction is a direction in which an imaginary line extending in the first direction is rotated by a predetermined angle in a direction in which the user is present.

(8): In any of the aspects (1) to (7) described above, the predetermined angle is an angle at which the imaginary line does not arrive at the user by the rotation.

(9): In any of the aspects (1) to (8) described above, the control portion stops the specific operation of the movable body when the direction in which the user proceeds is transmitted to the user, and then the user enters the direction of proceeding.

(10): In any of the aspects (1) to (9) described above, after the control portion stops the specific operation of the movable body, the user is followed instead of the leading of the user.

(11): In any of the aspects (1) to (10) described above, in a case where a distance between the movable body and the user becomes less than a set distance when the movable body is performing the specific operation, the control portion causes the movable body to retract so that the distance between the movable body and the user becomes equal to or more than the set distance.

(12): In any of the aspects (1) to (11) described above, the control portion communicates with a server device, acquires map information of a region where the movable body moves from the server device, and controls the movable body with reference to the acquired map information.

(13): In any of the aspects (1) to (12) described above, the specific operation is an operation in which the movable body performs a rotation operation or a turn operation and transmits the direction in which the user proceeds to the user.

(14): A movable body control method according to another aspect of the present invention is a method by way of a computer, including: recognizing a situation at a periphery of a movable body and a user based on an image in which the situation at the periphery of the movable body is captured; controlling the movable body so that the movable body moves in front of the user and leads the user based on the situation at the periphery; and in a case where it is assumed that leading of the user is continued, when it is predicted that a predetermined situation occurs which prevents the user from arriving at a desired position at which the user wants to arrive due to presence of the movable body in front of the user, transmitting a direction in which the user proceeds to the user by controlling the movable body so as to stop the leading of the user and so that the movable body performs a specific operation which is a rotation operation or a turn operation.

(15): A program in which a program according to another aspect of the present invention is stored causes a computer to execute: a process of recognizing a situation at a periphery of a movable body and a user based on an image in which the situation at the periphery of the movable body is captured; a process of controlling the movable body so that the movable body moves in front of the user and leads the user based on the situation at the periphery; and in a case where it is assumed that leading of the user is continued, when it is predicted that a predetermined situation occurs which prevents the user from arriving at a desired position at which the user wants to arrive due to presence of the movable body in front of the user, a process of transmitting a direction in which the user proceeds to the user by controlling the movable body so as to stop the leading of the user and so that the movable body performs a specific operation which is a rotation operation or a turn operation.

ADVANTAGE OF THE INVENTION

According to the aspects (1) to (15) described above, it is possible to guide the user in the desired direction.

According to the aspect (9) or (10) described above, it is possible to smoothly guide the user to a destination. For example, when the specific operation is continued in the case where the user proceeds in the desired direction, the user may be confused by the transmission of information by the specific operation. However, as described above, when the user proceeds in the desired direction, by stopping the specific operation, the movable body can smoothly guide the user to the destination.

According to the aspect (11) described above, the movable body acts so as to maintain the distance to the user to be equal to or more than a predetermined distance, and therefore, it is possible to reduce the anxiety given to the user by approaching too close to the user.

BRIEF DESCRIPTION OF THE DRAWINGS

FIG. 1 is a view showing an example of the configuration of a movable body system 1 including a movable body 100.

FIG. 2 is a view showing an example of a use manner of the movable body 100.

FIG. 3 is a view showing a guidance mode.

FIG. 4 is a perspective view showing the movable body 100.

FIG. 5 is a view showing an example of a functional configuration of the movable body 100.

FIG. 6 is a view showing a behavior in which the movable body 100 stops leading.

FIG. 7 is a view (part 1) showing a behavior after the movable body 100 stops.

FIG. 8 is a view (part 2) showing a behavior after the movable body 100 stops.

FIG. 9 is a view (part 1) showing a specific operation.

FIG. 10 is a view (part 2) showing a specific operation.

FIG. 11 is a view showing an example of a scene in which the movable body follows a user after the specific operation.

FIG. 12 is a view showing an example of a behavior of the movable body when the user does not proceed in a destination direction.

FIG. 13 is a flowchart showing an example of a flow of a process performed by a control device 200 of the movable body 100.

FIG. 14 is a view showing an example of a scene in which the specific operation is not performed.

FIG. 15 is a view showing an example of a scene in which the movable body 100 adjusts a position.

FIG. 16 is a view showing an example of a scene in which an object OB is present on a second traffic path Pa2.

FIG. 17 is a view showing an example of a scene in which the width of a first traffic path Pa1 becomes narrower in the middle.

## DESCRIPTION OF THE EMBODIMENTS

Hereinafter, embodiments of a movable body control device, a movable body control method, and a program of the present invention will be described with reference to the drawings.

<First embodiment>

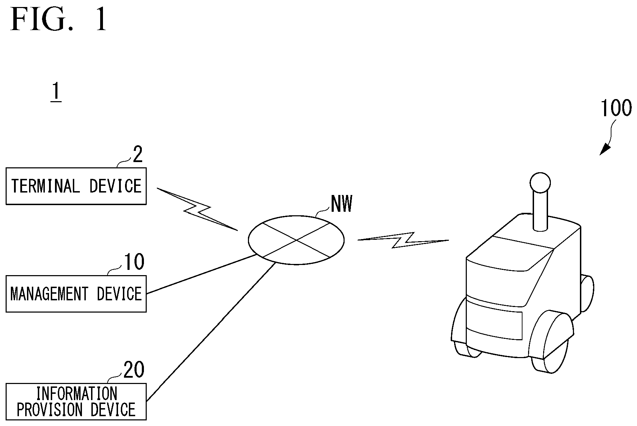

FIG. 1 is a view showing an example of the configuration of a movable body system 1 including a movable body 100. The movable body system 1 includes, for example, one or more terminal devices 2, a management device 10, an information provision device 20, and one or more movable bodies 100. These components performs communication, for example, via the network NW. The network NW is, for example, an arbitrary network such as a LAN, a WAN, an Internet line.

[Terminal Device]

The terminal device 2 is, for example, a computer device such as a smartphone or a tablet terminal. The terminal device 2 requests the provision of the authority of use of the movable body 100 from the management device 10 or acquires information indicating that the use is permitted, for example, based on an operation of the user.

[Management device]

The management device 10 grants the authority of use of the movable body 100 to a user of the terminal device 2 in response to the request of the terminal device 2 and manages the reservation of use of the movable body 100. The management device 10 generates and manages schedule information in which, for example, identification information of a user registered in advance and the date and time of the use reservation of the movable body 100 are associated with each other.

[Information provision device]

The information provision device 20 provides the movable body 100 with map information of a position at which the movable body 100 is present, a region to which the movable body 100 moves, and the vicinity of the region. The information provision device 20 may generate a route to a destination of the movable body 100 and provide the generated route to the movable body 100 in response to a request of the movable body 100.

[Movable body]

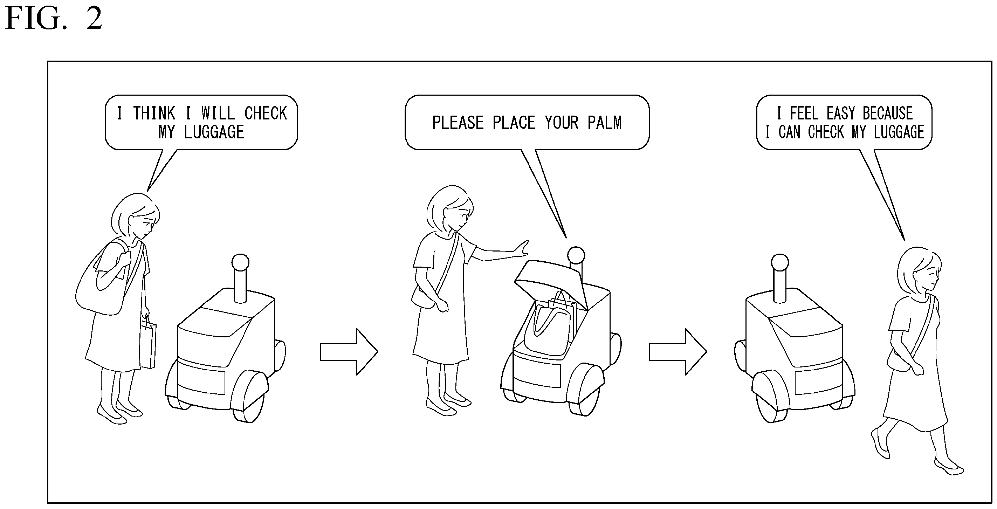

The movable body 100 is used by a user in a use manner as described below. FIG. 2 is a view showing an example of a use manner of the movable body 100. The movable body 100 is arranged at a predetermined position, for example, in a facility or a town. When the user wants to use the movable body 100, the user can start the use by operating an operation portion (not shown) of the movable body 100 or can start the use of the movable body 100 by operating the terminal device 2. For example, when the user goes out for shopping and has a large amount of luggage, the user starts the use of the movable body 100 and puts the luggage into a storage portion of the movable body 100. Then, the movable body 100 moves together with the user so as to autonomously follow the user. The user can continue shopping in a state where the luggage is stored in the movable body 100 or can go to the next destination. For example, the movable body 100 moves while moving on a sidewalk or a pedestrian crossing of a roadway together with the user. The movable body 100 is movable in a region where a pedestrian can pass such as a sidewalk and a roadway. For example, the movable body 100 may be used in an indoor or outdoor facility such as a shopping center, an airport, a park, or a theme park or in a private land, and is movable in a region where the pedestrian can pass.

The movable body 100 may be autonomously movable in a mode such as a guidance mode or an emergency mode in addition to (or instead of) a follow mode in which the movable body 100 follows the user as described above.

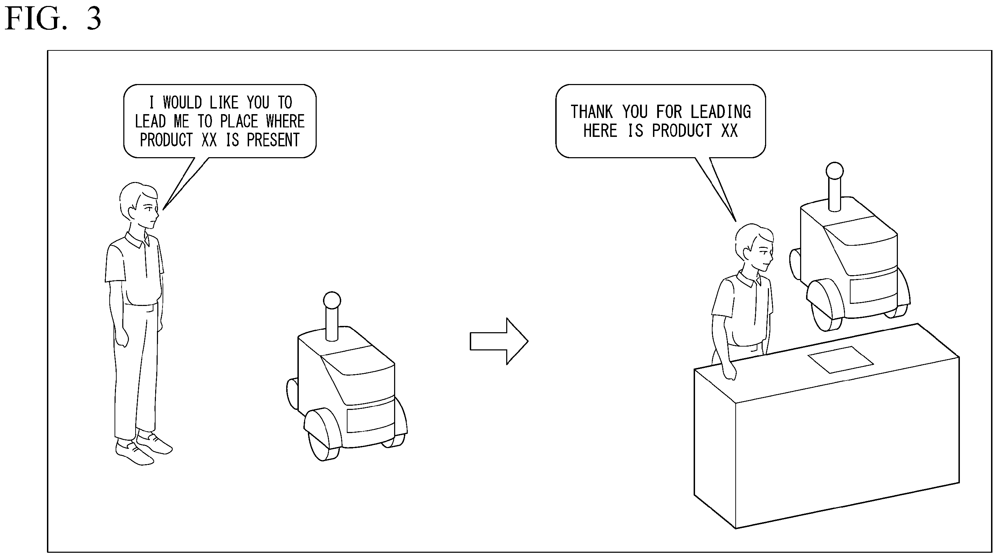

FIG. 3 is a view showing a guidance mode. The guidance mode is a mode that guides the user to a destination specified by the user, and is a mode that leads the user by autonomously moving in front of the user in accordance with a movement speed of the user. As shown in FIG. 3, when a user is searching for a predetermined product in a shopping center and when the user requests the movable body 100 to lead the user to the location of the predetermined product, the movable body 100 leads the user to the location of the product. Thereby, the user can easily find the predetermined product. When the movable body 100 is used in the shopping center, the movable body 100 or the information provision device 20 holds information in which the location of a product, the location of a store, the location of a facility in the shopping center, and the like are associated with map information, and map information of the shopping center. The map information includes detailed map information including the widths of roads and passages or the like.

The emergency mode is a mode that autonomously moves for asking for help from a nearby person or a nearby facility in order to help the user when an abnormality occurs at the user (for example, when the user falls) during moving with the user. Further, the movable body 100 may move while maintaining a distance that is not close to the user and is not far from the user in addition to (or instead of) the follow and the guidance as described above.

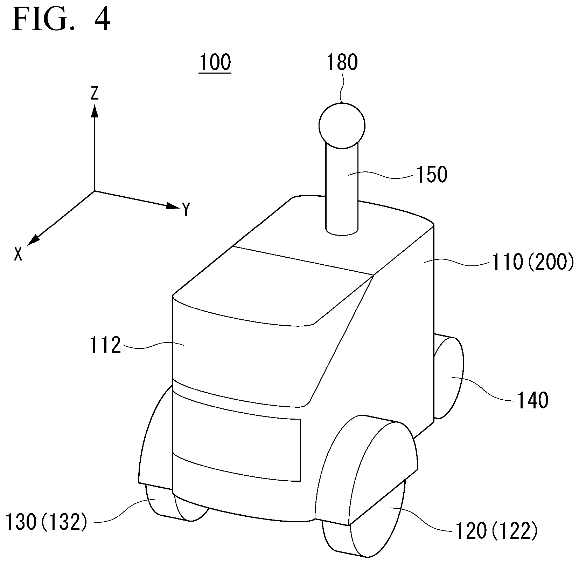

FIG. 4 is a perspective view showing the movable body 100. In the following description, a front direction of the movable body 100 is defined as a plus x direction, a rear direction of the movable body 100 is defined as a minus x direction, a left direction with respect to the plus x direction which is a width direction of the movable body 100 is defined as a plus y direction, a right direction is defined as a minus y direction, and a height direction of the movable body 100 which is a direction orthogonal to the x direction and the y direction is defined as a plus z direction.

The movable body 100 includes, for example, a base body 110, a door portion 112 that is provided on the base body 110, and a wheel (a first wheel 120, a second wheel 130, and a third wheel 140) that is assembled to the base body 110. For example, the user can open the door portion 112 and can put the luggage in the storage portion provided on the base body 110 or take the luggage out of the storage portion. The first wheel 120 and the second wheel 130 are a drive wheel, and the third wheel 140 is an auxiliary wheel (driven wheel). The movable body 100 may be movable by using a configuration other than the wheel such as an endless track.

A support body 150 having a cylindrical shape and extending in the plus z direction is provided on a surface in the plus z direction of the base body 110. A camera 180 that captures an image of the circumference of the movable body 100 is provided on an end portion in the plus z direction of the support body 150. The position where the camera 180 is provided may be an arbitrary position that is different from the position described above.

The camera 180 is, for example, a camera capable of capturing an image of the periphery of the movable body 100 at a wide angle (for example, at 360 degrees). The camera 180 may include a plurality of cameras. The camera 180 may be realized, for example, by combining a plurality of 120-degree cameras or a plurality of 60-degree cameras.

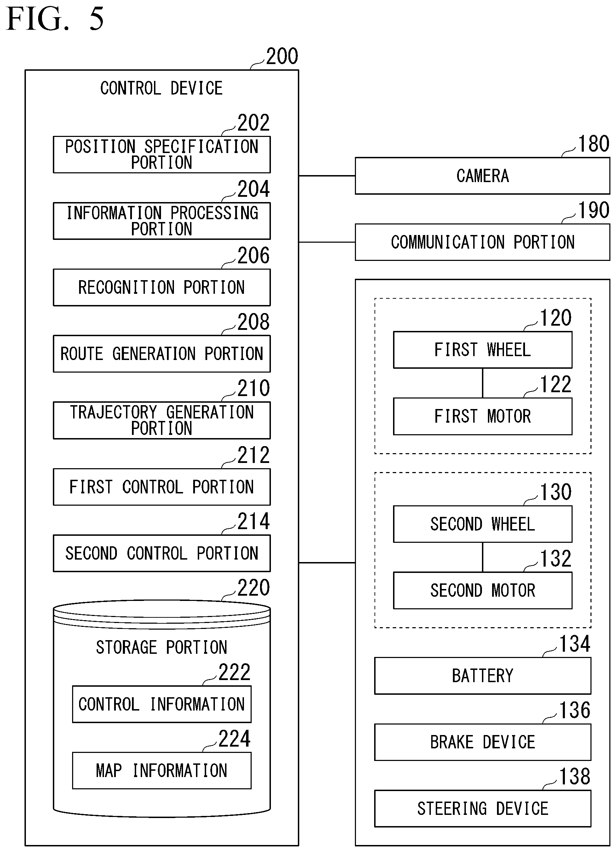

FIG. 5 is a view showing an example of a functional configuration of the movable body 100. The movable body 100 further includes a first motor 122, a second motor 132, a battery 134, a brake device 136, a steering device 138, a communication portion 190, and a control device 200 in addition to the functional configuration shown in FIG. 4. The first motor 122 and the second motor 132 are operated by electric power supplied by the battery 134. The first motor 122 drives the first wheel 120, and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel based on a command of the control device 200. The steering device 138 includes an electric motor. The electric motor changes the direction of the first wheel 120 or the second wheel 130 by applying a force to a rack-and-pinion mechanism, for example, based on a command of the control device 200 and changes the course of the movable body 100.

The communication portion 190 is a communication interface for communicating with the terminal device 2, the management device 10, or the information provision device 20.

[Control device]

The control device 200 includes, for example, a position specification portion 202, an information processing portion 204, a recognition portion 206, a route generation portion 208, a trajectory generation portion 210, a first control portion 212, a second control portion 214, and a storage portion 220. The position specification portion 202, the information processing portion 204, the recognition portion 206, the route generation portion 208, the trajectory generation portion 210, the first control portion 212, and the second control portion 214 are realized, for example, by a hardware processor such as a CPU (Central Processing Unit) executing a program (software). Some or all of these components may be realized by hardware (a circuit portion including circuitry) such as an LSI (Large Scale Integration), an ASIC (Application Specific Integrated Circuit), an FPGA (Field-Programmable Gate Array), or a GPU (Graphics Processing Unit), or may be realized by cooperation of software and hardware. The program may be stored in advance in a storage device (a storage device including a non-transitory storage medium) such as a HDD (Hard Disk Drive) or a flash memory, or may be stored in a removable storage medium (non-transitory storage medium) such as a DVD or a CD-ROM and be installed by attaching the storage medium to a drive device. The storage portion 220 is realized by a storage device such as a HDD, a flash memory, or a RAM (Random-Access Memory). The storage portion 220 stores map information 224 and control information 222 which is a control program for controlling the action of the movable body 100 that are referred to by the first control portion 212 and the second control portion 214. The map information 224 is, for example, map information provided by the information provision device 20 of a position at which the movable body 100 is present, a region to which the movable body 100 moves, the vicinity of the region, and the like. Some or all of the route generation portion 208, the trajectory generation portion 210, the first control portion 212, and the second control portion 214 are an example of a "control portion". Some or all of the functional configurations included in the control device 200 may be included in another device. For example, another device and the movable body 100 may communicate with each other and cooperate to control the movable body 100.

The position specification portion 202 specifies the position of the movable body 100. The position specification portion 202 acquires position information of the movable body 100 by a GPS (Global Positioning System) device (not shown) built in the movable body 100. The position information may be, for example, a two-dimensional map coordinate or may be latitude and longitude information.

The information processing portion 204 manages, for example, information acquired from the terminal device 2, the management device 10, or the information provision device 20.

The recognition portion 206 recognizes a position (a distance from the movable body 100 and a direction to the movable body 100) of an object that is present at the periphery of the movable body 100 and the state of a speed, acceleration, and the like, for example, based on an image captured by the camera 180. The object includes a traffic participant, an obstacle that is present in the facility or on the road, and the like. The recognition portion 206 recognizes and tracks the user of the movable body 100. The recognition portion 206 tracks the user, for example, based on an image (for example, a face image of the user) in which the user who is registered when the user uses the movable body 100 is captured or a face image (or a feature amount obtained from the user face image) of the user provided by the terminal device 2 or the management device 10. The recognition portion 206 recognizes a gesture made by the user. A detection portion which is different from the camera such as a radar device or a LIDAR may be provided on the movable body 100. In this case, the recognition portion 206 recognizes the situation at the periphery of the movable body M by using a detection result of the radar device or the LIDAR instead of (or in addition to) the image.

The route generation portion 208 generates a route to a destination specified by the user. The destination may be a place of a product or a place of a facility. In this case, the user specifies a product or a facility, and thereby, the movable body 100 sets the location of the specified product or the specified facility as the destination. The route is a route by which it is possible to reasonably reach the destination. For example, the distance to the destination, the time for reaching the destination, the ease of passing of the route, and the like are converted into a score, and a route is derived in which each score and a score obtained by integrating the scores are equal to or more than a threshold value.

The trajectory generation portion 210 generates a trajectory on which the movable body 100 should travel in the future, for example, based on a gesture of the user, a destination set by the user, a surrounding object, a position of the user, and the like. The trajectory generation portion 210 generates a trajectory on which the movable body 100 can move smoothly to a target point. The trajectory generation portion 210 generates a trajectory corresponding to the action of the movable body 100, for example, based on a correspondence relationship between a gesture and an action set in advance or generates a trajectory for heading to a destination while avoiding a surrounding object. Further, the trajectory generation portion 210 generates, for example, a trajectory for following the user who is tracked or a trajectory for leading the user. The trajectory generation portion 210 generates, for example, a trajectory in accordance with an action based on a mode set in advance. The trajectory generation portion 210 generates a plurality of trajectories in accordance with the action of the movable body 100 and obtains a risk for each trajectory, and when the total value of obtained risks or the risk of each trajectory point satisfies a reference set in advance (for example, when the total value is equal to or less than a threshold value Th1, and the risk of each trajectory point is equal to or less than a threshold value Th2), a trajectory that satisfies the reference is adopted as a trajectory on which the movable body 100 moves. The risk tends to be, for example, higher as the distance to the obstacle is smaller with respect to the trajectory (trajectory point of the trajectory) and be smaller as the distance to the obstacle is larger with respect to the trajectory.

The first control portion 212 controls the motor (the first motor 122, the second motor 132), the brake device 136, and the steering device 138 so that the movable body 100 travels along the trajectory that satisfies the reference set in advance.

The second control portion 214 controls the movable body 100 so that the distance between the user and the movable body 100 is equal to or more than a threshold value based on a recognition result of the recognition portion 206. When the distance between the user and the movable body 100 becomes equal to or less than the threshold value, the second control portion 214 specifies a position at which the distance between the user and the movable body 100 is equal to or more than the threshold value and which does not interfere with a surrounding object and causes the trajectory generation portion 210 to generate a trajectory for moving the movable body 100 to the position. The second control portion 214 moves the movable body 100 to the position where the distance between the movable body 100 and the user is equal to or more than the threshold value based on the generated trajectory. For example, the second control portion 214 performs the control described above when the movable body 100 is stopping or when the movable body 100 is performing a turn operation as described later.

[Overview]

The control device 200 controls the movable body 100 so that the movable body 100 moves in front of the user and leads the user based on a situation at the periphery of the movable body 100. In the case where it is assumed that leading of the user is continued, when it is predicted that a predetermined situation occurs which prevents the user from arriving at a desired position at which the user wants to arrive due to presence of the movable body 100 in front of the user, the control device 200 transmits a direction in which the user proceeds to the user by controlling the movable body 100 so as to stop the leading of the user and so that the movable body 100 performs a specific operation which is a rotation operation or a turn operation. The control device 200 performs this process, for example, with reference to the control information 222.

The specific operation is an operation in which the movable body 100 transmits the direction in which the user proceeds to the user by a rotation operation, a turn operation, or the like. The specific operation may be an operation of transmitting the direction in which the user proceeds to the user such as displaying of a proceeding destination on a display portion or outputting of the proceeding destination by speech instead of the operation described above.

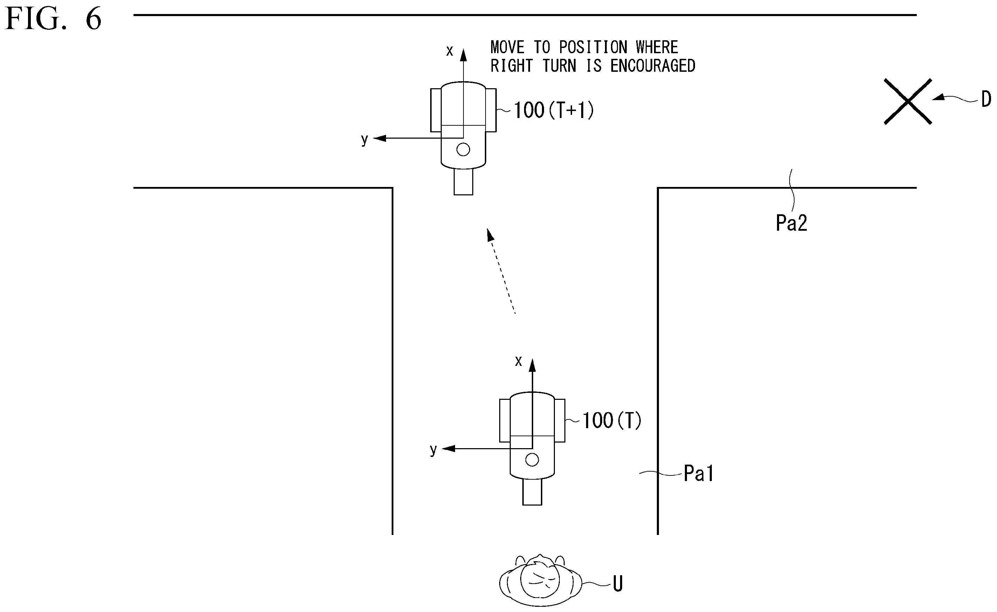

The predetermined situation is a situation in which the movable body 100 prevents the user from arriving at a desired position at which the user wants to arrive and includes, for example, a situation in which the user is burdened in order to overtake the movable body 100 and arrive at the desired position and a situation in which it is difficult to arrive at the desired position. The predetermined situation is, for example, a situation in which the user needs to avoid the movable body 100 in order to arrive at a desired position or a situation in which the space between the movable body 100 and an obstacle such as a wall is a passage for the user to arrive at a desired position, and since the passage is narrow, the movable body 100 prevents the user from arriving at the desired position at which the user wants to arrive. For example, the predetermined situation may be a situation in which when it is assumed that the movable body 100 continues the leading, and the movable body 100 arrives at the desired position or the vicinity of the desired position, the movable body 100 is located between the user and the desired position, and a region for the user to overtake the movable body 100 so as to be closer to the desired position than the movable body 100 is not present at a position where the movable body 100 is present and in the vicinity of the position. Hereinafter, this process is described with reference to FIG. 6 to FIG. 12.

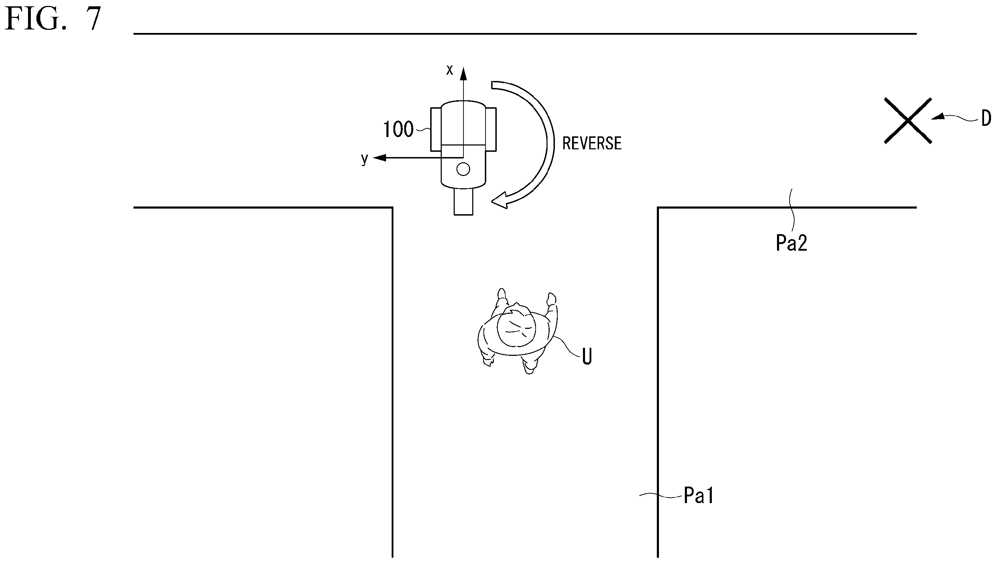

FIG. 6 is a view showing a behavior in which the movable body 100 stops leading. FIG. 6 is a top view of a first traffic path Pa1 and a second traffic path Pa2 connected to (intersecting with) the first traffic path Pa1 (the same applies to FIG. 7, FIG. 9, FIG. 11, FIG. 12, and FIGS. 14 to 17). A destination D of a user U is a position where the user U turns right on the first traffic path Pa1 (an example of a "region of a first width"), enters the second traffic path Pa2 (an example of a "region of a second width"), and proceeds by a predetermined distance. For example, when the movable body 100 moves in front of the user U, guides the user U to the destination D, and arrives at the destination D, the user U may not be able to approach the destination D, or the user U may be burdened. This is because the width of the second traffic path Pa2 is narrow, and the user U may not be able to overtake the movable body 100, or it may be difficult for the user U to overtake the movable body 100. Therefore, when the movable body 100 can predict that a situation (predetermined situation) described above occurs, the movable body 100 stops the leading and performs the following behavior. In the following description, the case where the movable body 100 and the user turn right is described, but the behavior of the movable body 100 may be controlled by a similar way when the movable body 100 and the user turn left.

At a time T, the movable body 100 is moving on the first traffic path Pa1 and leading the user U. When the movable body 100 refers to the map information and predicts that a predetermined situation occurs, the movable body 100 moves to a position where the user U is encouraged to turn right, and stops. This time is a time T+1. The stop position is in an intersection region where the first traffic path Pa1 and the second traffic path Pa2 intersect with each other or in the vicinity of the intersection region.

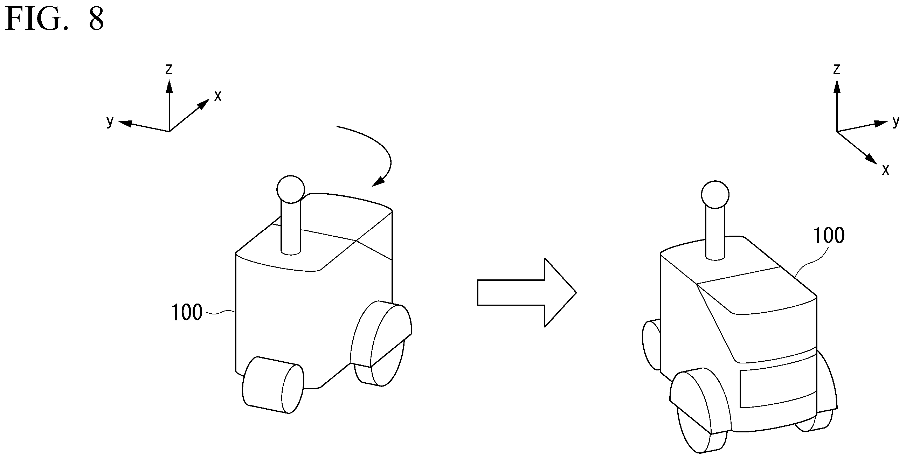

FIG. 7 is a view showing a behavior after the movable body 100 stops. After the movable body 100 stops, the movable body 100 reverses, orients a front surface (plus x direction) in a direction in which the user U is present, and further adjusts the direction of the movable body 100 so that the plus x direction of the movable body 100 and an extension direction of the first traffic path Pa1 are parallel to each other. The movable body 100 causes the front surface which is the plus x direction to face in the direction of the user U on the basis of the z direction as shown in FIG. 8.

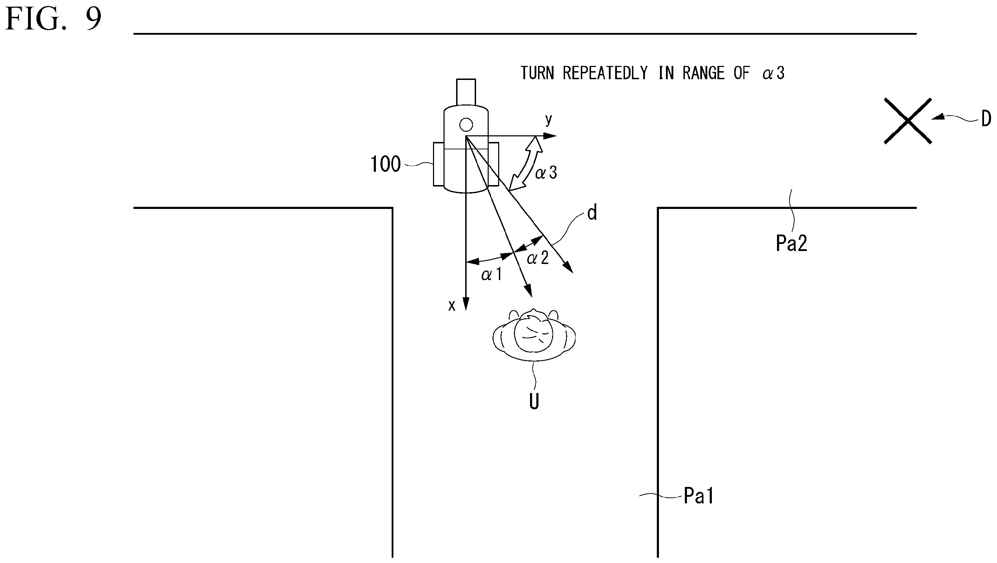

FIG. 9 is a view showing a specific operation. After the movable body 100 reverses, the movable body 100 performs a turn operation or a rotation operation of reciprocating the movable body 100 within a range of an angle $\alpha3$ in the direction of the plus x direction on the basis of the z direction. The angle $\alpha3$ is an angle formed of a line segment d obtained by rotating a line segment in the plus x direction on the basis of the z direction by an angle $\alpha1$ and an angle $\alpha2$ in the counterclockwise direction and a line segment (a line segment corresponding to a direction in which the user is to be guided) in the y direction.

The angle $\alpha1$ is obtained by the following Expression. The (px, py) is a position of the user U in a coordinate system on the basis of the movable body 100. The angle $\alpha2$ is an angle set in advance.

[Expression 1]

$$\alpha1 := \arctan\left(\frac{py}{px}\right)$$

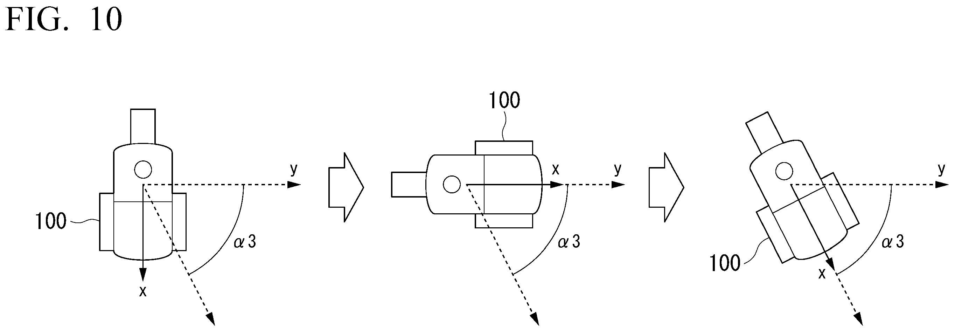

As shown in FIG. 10, the movable body 100 causes the base body 110 to turn or rotate and performs a behavior so that the front surface reciprocates within the range of the angle $\alpha3$. This behavior is a behavior that encourages the user U to enter the second traffic path Pa2.

The above embodiment is described using an example in which the angle $\alpha3$ is obtained by using the angle $\alpha1$ and the angle $\alpha2$; however, instead of (or in addition to) this, the angle $\alpha3$ may be an angle formed of the first line segment and the second line segment. The first line segment is a line segment extending in a first direction in which the user is to proceed, and the second line segment is a line segment extending in a direction obtained by rotating the first line segment (imaginary line) in the direction in which the user is present on the basis of the z direction by a predetermined angle. The predetermined angle is an angle at which the first line segment does not reach the user by rotation. By performing the specific operation based on such an angle, the user can easily recognize the direction in which the user should proceed.

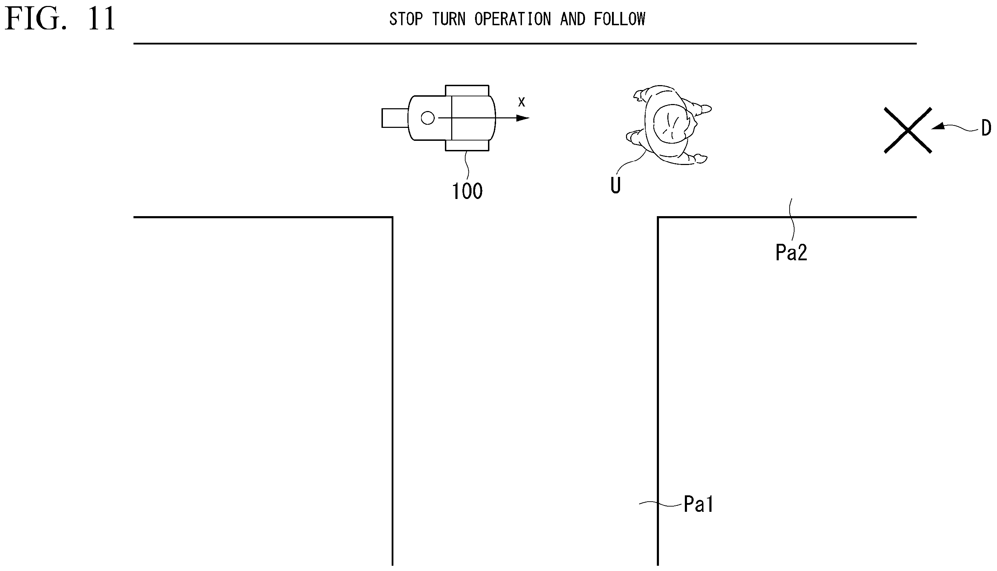

As shown in FIG. 11, when the user U overtakes the movable body 100 and enters the second traffic path Pa2 by the specific operation, the movable body 100 rotates the movable body 100 on the basis of the z direction, orients the plus x direction toward the direction of the user U or the direction in which the second traffic path Pa2 extends, and follows the user U.

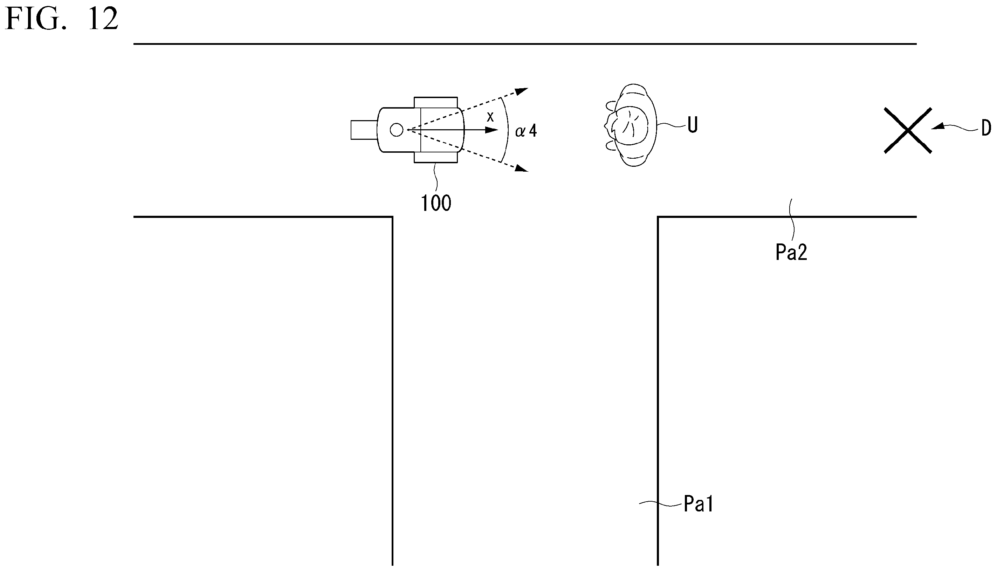

As shown in FIG. 12, when the user U overtakes the movable body 100, but the user U does not proceed in the destination direction (for example, when the user U turns around and faces in the direction of the movable body 100), the movable body 100 performs a rotation operation or a turn operation within a range of an angle $\alpha4$ on the basis of the z direction. The angle $\alpha4$ is a predetermined angle on the basis of the plus x direction. At this time, the movable body 100 may perform the rotation operation or the turn operation while moving so as to approach the user. The behavior described above is performed, and thereby, the user U can recognize the direction in which the user U should proceed.

[Flowchart]

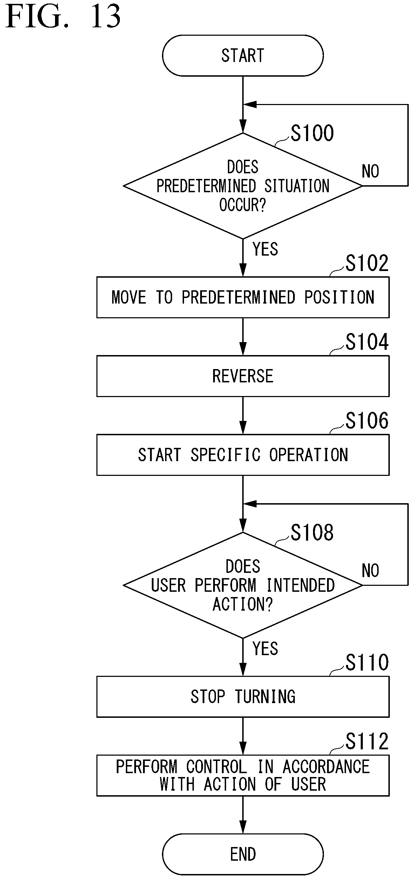

FIG. 13 is a flowchart showing an example of a flow of a process performed by the control device 200 of the movable body 100. First, when the first control portion 212 controls the movable body 100 to move along the trajectory generated by the trajectory generation portion 210, the first control portion 212 predicts whether or not a predetermined situation occurs after a predetermined time or when the movable body 100 moves by a predetermined distance, based on the trajectory, the map information, and the situation at the periphery described above (Step S100). When it is predicted that the predetermined situation does not occur, the first control portion 212 moves the movable body 100 toward the destination and continues the leading of the user.

When it is predicted that the predetermined situation occurs, the first control portion 212 moves the movable body 100 to a predetermined position (for example, a position at which the user U is encouraged to turn right) and stops the movable body 100 (Step S102). Next, the first control portion 212 reverses the movable body 100 at the stopping position and starts the specific operation (Step S104, S106). Next, the first control portion 212 determines whether or not the user performs an intended action (an action of entering the second traffic path Pa2, an action of attempting to enter the second traffic path Pa2, or the like) (Step S108).

When the user performs an intended action, the first control portion 212 stops the specific operation of the movable body 100 (Step S110) and performs a control in accordance with the action of the user (Step S112). For example, the user is followed, or an operation for guiding the user to the direction of the destination is performed as described above with reference to FIG. 12. Thereby, the process of one routine of the present flowchart is ended.

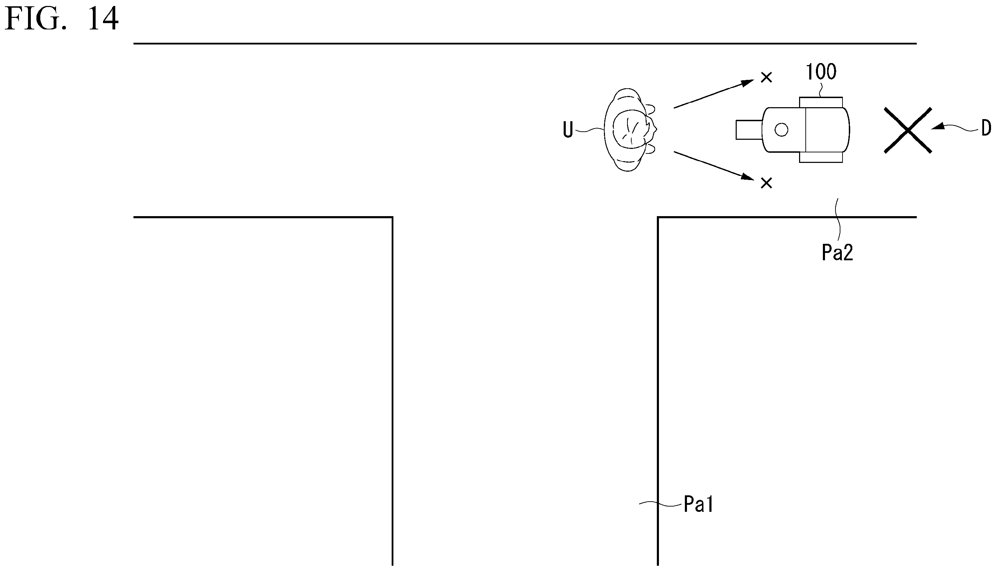

Here, as shown in FIG. 14, when the movable body 100 continues the leading and guides the user to the destination, there are cases in which the width of the second traffic path pa2 is narrow, it is difficult for the user to overtake the movable body 100, and the user cannot easily arrive at the destination. Further, there are cases in which a HMI (Human Machine Interface) or the like is not provided on the movable body 100, or transmission of information cannot be sufficiently performed even when the HMI is provided. In such cases, the user may not overtake the movable body 100 and may not perform an action of entering the second traffic path Pa2.

Therefore, in the present embodiment, as described above, the movable body 100 performs the specific operation at the predetermined position and encourages the user to move so as to enter the second traffic path Pa2. Thereby, it is possible to prevent occurrence of the predetermined situation and easily guide the user to the destination.

The above embodiment is described using an example in which the width of the second traffic path Pa2 is narrower than the width of the first traffic path Pa1; however, the width of the second traffic path Pa2 and the width of the first traffic path Pa1 may be the same as each other, or the width of the second traffic path Pa2 may be wider than the width of the first traffic path Pa1. Even in this case, the specific operation may be performed when the predetermined situation occurs. For example, the movable body 100 may enter the second traffic path Pa2, may move to a position that does not prevent the user from proceeding, and may perform the specific operation. The position that does not prevent the user from proceeding is, for example, a position where the movable body 100 turns left on the first traffic path Pa1 and enters the second traffic path Pa2.

[Another example (1)]

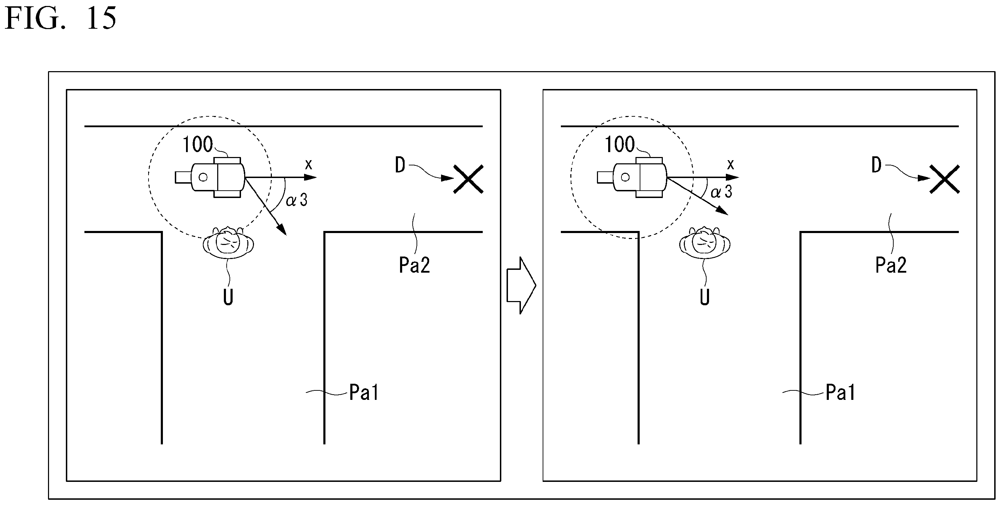

The movable body 100 may adjust a position so that the distance to the user U is not less than a predetermined distance. FIG. 15 is a view showing an example of a scene in which the movable body 100 adjusts a position. For example, it is assumed that the user U approaches the movable body 100 when the movable body 100 is performing the specific operation. At this time, the second control portion 214 determines that the distance between the user U and the movable body 100 is less than the predetermined distance and moves the movable body 100 so as to maintain the distance between the user U and the movable body 100 to be equal to or more than the predetermined distance. For example, the second control portion 214 refers to a surrounding situation, specifies a position that does not interfere with a surrounding object, and moves the movable body 100 to the specified position. For example, the movable body 100 retracts while temporarily stopping the specific operation or performing the specific operation and continues the specific operation at the retracted position. For example, when the movable body 100 retracts, the first control portion 212 derives the angle $\alpha3$ again at the retracted position and performs the specific operation. The angle $\alpha3$ may be changed in accordance with the change of the position of the user as described above, or may not be changed once the angle is set.

As described above, the movable body 100 acts so as to maintain the distance to the user to be equal to or more than the predetermined distance, and therefore, it is possible to reduce the anxiety given to the user by approaching too close to the user.

[Another example (2)]

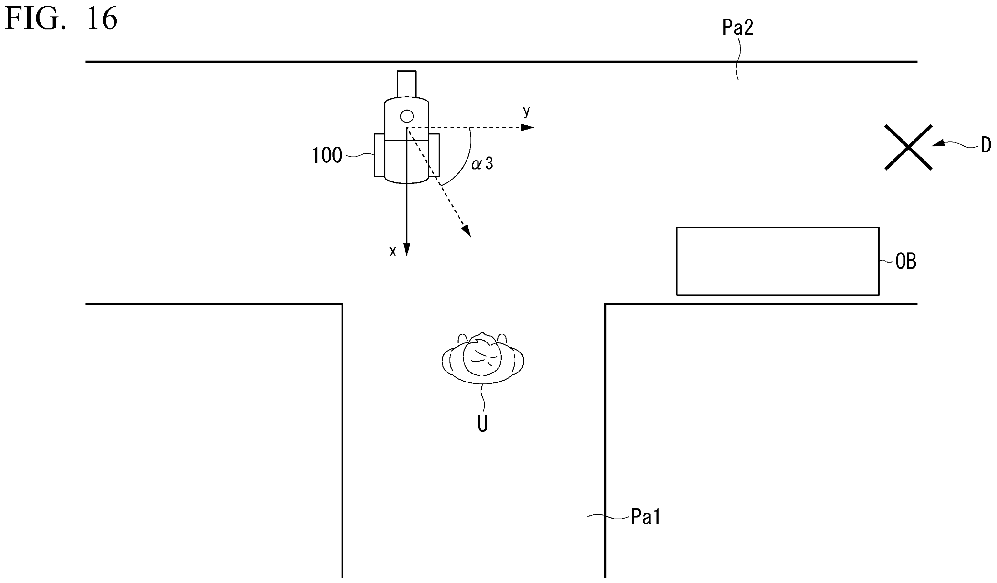

The movable body 100 may perform the specific operation in accordance with the presence of a surrounding object. As shown in FIG. 16, the width of the second traffic path Pa2 is sufficiently wide for the user to overtake the movable body 100. However, since an object OB is present on the second traffic path Pa2, there is no width that is sufficiently wide for the user to overtake the movable body 100. For example, the first control portion 212 recognizes that in the map information, the predetermined situation does not occur, and it is not necessary to perform the specific operation, but may perform the specific operation by predicting that the predetermined situation occurs based on a surrounding situation when approaching the second traffic path Pa2. The second traffic path Pa2 where the object OB is present is an example of a "region of a second width".

Similarly, when the movable body 100 guides the user based on a recognition result of the recognition portion 206 without using the map information, the movable body 100 predicts whether or not the predetermined situation occurs in accordance with the surrounding situation as described above and performs a control in accordance with a prediction result.

As described above, since the movable body 100 performs the control in accordance with the surrounding situation which changes by the minute in real time, it is possible to further reliably guide the user U to the destination.

[Another example (3)]

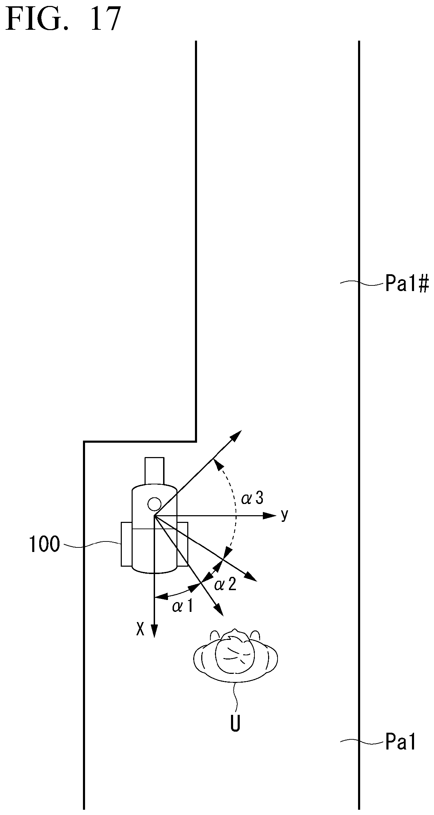

The above embodiment is described using an example of the behavior of the movable body 100 in the scene in which the movable body 100 and the user turn right. As shown in FIG. 17, even in a scene where the movable body 100 and the user proceed straight, the specific operation may be performed when it is predicted that the predetermined situation occurs.

For example, when the width of the first traffic path Pa1 ((an example of a "region of a first width")) becomes narrower in the middle, and the first traffic path Pa1 becomes a first traffic path Pa1# (an example of a "region of a second width"), the movable body 100 moves to a position that does not interfere with the movement of the user before entering the first traffic path Pa1#. Then, the movable body 100 reverses, performs the specific operation, and guides the user in the direction of the first traffic path Pa1#.

As described above, the movable body 100 can further reliably guide the user to the destination in structures of various passages or roads.

According to the embodiment described above, in the case where it is assumed that leading of the user is continued, when it is predicted that a predetermined situation occurs which prevents the user from arriving at a desired position at which the user wants to arrive due to presence of the movable body 100 in front of the user, the control device 200 of the movable body 100 transmits a direction in which the user proceeds to the user by controlling the movable body 100 so as to stop the leading of the user and so that the movable body 100 performs a specific operation which is a rotation operation or a turn operation. Thereby, it is possible to guide the user in the desired direction.

The embodiments described above can be expressed as follows.

A movable body including:

a storage medium that stores computer-readable instructions; and

a processor coupled to the storage medium,

wherein the processor executes the computer-readable instructions to perform:

recognize a situation at a periphery of a movable body and a user based on an image in which the situation at the periphery of the movable body is captured;

control the movable body so that the movable body moves in front of the user and leads the user based on the situation at the periphery; and

in a case where it is assumed that leading of the user is continued, when it is predicted that a predetermined situation occurs which prevents the user from arriving at a desired position at which the user wants to arrive due to presence of the movable body in front of the user,

transmitting a direction in which the user proceeds to the user by controlling the movable body so as to stop the leading of the user and so that the movable body performs a specific operation which is a rotation operation or a turn operation.

Although modes for implementing the present invention have been described using the embodiments, the present invention is not limited to such embodiments at all, and various modifications and replacements can be made without departing from the scope of the present invention.

DESCRIPTION OF THE REFERENCE SYMBOLS

1      Movable body system
2      Terminal device
10     Management device
20     Information provision device
100    Movable body
110    Base body
180    Camera
200    Control device
204    Information processing portion
206    Recognition portion
208    Route generation portion
210    Trajectory generation portion
212    First control portion

214 Second control portion
220 Storage portion
224 Map information

**Claims**

1. A movable body control device comprising:

   a recognition portion that recognizes a situation at a periphery of a movable body and a user based on an image in which the situation at the periphery of the movable body is captured; and
   a control portion that controls the movable body so that the movable body moves in front of the user and leads the user based on the situation at the periphery,
   wherein in a case where it is assumed that leading of the user is continued, when it is predicted that a predetermined situation occurs which prevents the user from arriving at a desired position at which the user wants to arrive due to presence of the movable body in front of the user,
   the control portion transmits a direction in which the user proceeds to the user by controlling the movable body so as to stop the leading of the user and so that the movable body performs a specific operation.

2. The movable body control device according to claim 1,
   wherein the predetermined situation is a situation in which when it is assumed that the movable body continues the leading, and the movable body arrives at the desired position or a vicinity of the desired position, the movable body is located between the user and the desired position, and a region for the user to overtake the movable body so as to be closer to the desired position than the movable body is not present at a position where the movable body is present and in a vicinity of the position.

3. The movable body control device according to claim 2,
   wherein the predetermined situation is a situation in which the movable body moves in a region of a first width, and then the movable body moves in a region of a second width that is narrower than the first width.

4. The movable body control device according to claim 3,
   wherein the control portion controls the movable body so that before entering the region of the second width, the leading of the user is stopped, and the movable body performs the specific operation, and transmits the direction in which the user proceeds to the user.

5. The movable body control device according to claim 4,

   wherein the region of the first width is a first traffic path which is a passage of the first width or a road of the first width,
   the region of the second width is a second traffic path which is a passage of the second width or a road of the second width,
   the first traffic path and the second traffic path intersect with each other, and
   the control portion transmits to the user so that the user enters the second traffic path by controlling the movable body so as to stop the leading of the user and perform the specific operation in a region in which the first traffic path and the second traffic path intersect with each other or in a vicinity of the region of intersecting.

6. The movable body control device according to claim 5,
   wherein the control portion transmits to the user so that the user enters the second traffic path by controlling the movable body so that the movable body is rotated, a front surface of the movable body faces in a direction in which the user is present, and then the specific operation is performed in the region in which the first traffic path and the second traffic path intersect with each other or in the vicinity of the region of intersecting.

7. The movable body control device according to any one of claims 1 to 6,

   wherein the specific operation is to rotate or turn the movable body to reciprocate a direction of a front surface of the movable body between a first direction and a second direction,
   the first direction is a direction in which the user is desired to proceed, and
   the second direction is a direction in which an imaginary line extending in the first direction is rotated by a predetermined angle in a direction in which the user is present.

8. The movable body control device according to claim 7,
   wherein the predetermined angle is an angle at which the imaginary line does not arrive at the user by the rotation.

9. The movable body control device according to any one of claims 1 to 6,
   wherein the control portion stops the specific operation of the movable body when the direction in which the user proceeds is transmitted to the user, and then the user enters the direction of proceeding.

10. The movable body control device according to claim 9,
    wherein after the control portion stops the specific operation of the movable body, the user is followed instead of the leading of the user.

11. The movable body control device according to any one of claims 1 to 6,
    wherein in a case where a distance between the movable body and the user becomes less than a set distance when the movable body is performing the specific operation, the control portion causes the movable body to retract so that the distance between the movable body and the user becomes equal to or more than the set distance.

12. The movable body control device according to any one of claims 1 to 6,

    wherein the control portion
    communicates with a server device,
    acquires map information of a region where the movable body moves from the server device, and
    controls the movable body with reference to the acquired map information.

13. The movable body control device according to any one of claims 1 to 6,
    wherein the specific operation is an operation in which the movable body performs a rotation operation or a turn operation and transmits the direction in which the user proceeds to the user.

14. A movable body control method by way of a computer, comprising:

    recognizing a situation at a periphery of a movable body and a user based on an image in which the situation at the periphery of the movable body is captured;
    controlling the movable body so that the movable body moves in front of the user and leads the user based on the situation at the periphery; and
    in a case where it is assumed that leading of the user is continued, when it is predicted that a predetermined situation occurs which prevents the user from arriving at a desired position at which the user wants to arrive due to presence of the movable body in front of the user,
    transmitting a direction in which the user proceeds to the user by controlling the movable body so as to stop the leading of the user and so that the movable body performs a specific operation which is a rotation operation or a turn operation.

15. A program that causes a computer to execute:

    a process of recognizing a situation at a periphery of a movable body and a user based on an image in which the situation at the periphery of the movable body is captured;
    a process of controlling the movable body so that the movable body moves in front of the user and leads the user based on the situation at the periphery; and
    in a case where it is assumed that leading of the user is continued, when it is predicted that a predetermined situation occurs which prevents the user from arriving at a desired position at which the user wants to arrive due to presence of the movable body in front of the user,
    a process of transmitting a direction in which the user proceeds to the user by controlling the movable body so as to stop the leading of the user and so that the movable body performs a specific operation which is a rotation operation or a turn operation.

FIG. 1

<u>1</u>

100

TERMINAL DEVICE 2

NW

MANAGEMENT DEVICE 10

INFORMATION PROVISION DEVICE 20

FIG. 2

EP 4 629 010 A1

FIG. 3

FIG. 4

FIG. 5

CONTROL DEVICE ~200

POSITION SPECIFICATION PORTION ~202

INFORMATION PROCESSING PORTION ~204

RECOGNITION PORTION ~206

ROUTE GENERATION PORTION ~208

TRAJECTORY GENERATION PORTION ~210

FIRST CONTROL PORTION ~212

SECOND CONTROL PORTION ~214

STORAGE PORTION ~220

CONTROL INFORMATION ~222

MAP INFORMATION ~224

CAMERA ~180

COMMUNICATION PORTION ~190

FIRST WHEEL ~120

FIRST MOTOR ~122

SECOND WHEEL ~130

SECOND MOTOR ~132

BATTERY ~134

BRAKE DEVICE ~136

STEERING DEVICE ~138

FIG. 6

MOVE TO POSITION WHERE
RIGHT TURN IS ENCOURAGED

D

100 (T+1)

100 (T)

Pa2

Pa1

U

FIG. 7

EP 4 629 010 A1

# FIG. 8

EP 4 629 010 A1

# FIG. 9

TURN REPEATEDLY IN RANGE OF $\alpha 3$

EP 4 629 010 A1

FIG. 10

FIG. 11

STOP TURN OPERATION AND FOLLOW

x

100

U

D

Pa2

Pa1

EP 4 629 010 A1

EP 4 629 010 A1

# FIG. 12

# FIG. 13

```
              ┌─────────────┐
              │    START    │
              └─────────────┘
                     │
                     │        ┌── S100
                     ▼       /
              ╱───────────────╲
             ╱      DOES        ╲   NO
            ◄  PREDETERMINED  ────────┐
             ╲   SITUATION     ╱      │
              ╲   OCCUR?     ╱        │
               ╲───────────╱         │
                     │ YES            │
                     ▼      ┌── S102  │
         ┌──────────────────────────┐ │
         │ MOVE TO PREDETERMINED    │ │
         │      POSITION            │ │
         └──────────────────────────┘ │
                     │      ┌── S104   │
                     ▼     /           │
         ┌──────────────────────────┐ │
         │         REVERSE          │ │
         └──────────────────────────┘ │
                     │      ┌── S106   │
                     ▼     /           │
         ┌──────────────────────────┐ │
         │   START SPECIFIC         │ │
         │      OPERATION           │ │
         └──────────────────────────┘ │
                     │                 │
                     ▼        ┌── S108  │
              ╱───────────────╲        │
             ╱      DOES        ╲   NO  │
            ◄  USER PERFORM  ────────┐ │
             ╲  INTENDED       ╱     │ │
              ╲   ACTION?    ╱       │ │
               ╲───────────╱        │ │
                     │ YES           │ │
                     ▼      ┌── S110  │ │
         ┌──────────────────────────┐ │ │
         │      STOP TURNING        │ │ │
         └──────────────────────────┘ │ │
                     │      ┌── S112   │ │
                     ▼     /           │ │
         ┌──────────────────────────┐ │ │
         │ PERFORM CONTROL IN       │ │ │
         │ ACCORDANCE WITH          │ │ │
         │   ACTION OF USER         │ │ │
         └──────────────────────────┘ │ │
                     │                 │ │
                     ▼                 │ │
              ┌─────────────┐          │ │
              │     END     │          │ │
              └─────────────┘          │ │
```

EP 4 629 010 A1

FIG. 14

FIG. 15

EP 4 629 010 A1

FIG. 16

Pa2

100

y

α3

x

D

OB

U

Pa1

EP 4 629 010 A1

# FIG. 17

## INTERNATIONAL SEARCH REPORT

| International application No. |
| --- |
| **PCT/JP2022/042734** |

| A. | CLASSIFICATION OF SUBJECT MATTER |
| --- | --- |

*G05D 1/02*(2020.01)i
FI: G05D1/02 H

According to International Patent Classification (IPC) or to both national classification and IPC

| B. | FIELDS SEARCHED |
| --- | --- |

Minimum documentation searched (classification system followed by classification symbols)

G05D1/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-129013 A (HONDA MOTOR CO LTD) 05 September 2022 (2022-09-05) paragraphs [0027], [0060] | 1, 12-15 |
| A | | 2-11 |
| Y | JP 2022-17770 A (HONDA MOTOR CO LTD) 26 January 2022 (2022-01-26) paragraphs [0023]-[0025] | 1, 12-15 |
| A | | 2-11 |
| Y | JP 2019-211961 A (PANASONIC CORPORATION) 12 December 2019 (2019-12-12) paragraph [0043] | 12 |
| A | | 2-11 |
| Y | JP 2022-132902 A (HONDA MOTOR CO LTD) 13 September 2022 (2022-09-13) paragraphs [0028], [0073] | 13-15 |
| A | | 2-11 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 December 2022** | **27 December 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/042734**

| Patent document cited in search report | | | Publication date (day/month/year) | Patent family member(s) | | | Publication date (day/month/year) |
|---|---|---|---|---|---|---|---|
| JP | 2022-129013 | A | 05 September 2022 | (Family: none) | | | |
| JP | 2022-17770 | A | 26 January 2022 | US<br>paragraphs [0032]-[0034]<br>CN | 2022/0019228<br><br>114003027 | A1<br><br>A | |
| JP | 2019-211961 | A | 12 December 2019 | US<br>paragraph [0098]<br>CN | 2019/0369642<br><br>110554692 | A1<br><br>A | |
| JP | 2022-132902 | A | 13 September 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012111011 A